# EUROPÄISCHE PATENTSCHRIFT

(11) **EP 1 519 860 B1**
(45) Veröffentlichungstag und Bekanntmachung des Hinweises auf die Patenterteilung: **22.03.2006**
(21) Anmeldenummer: 03738084.7
(22) Anmeldetag: 25.06.2003
(51) Int. Cl.: B60R 22/40

(54) **FAHRZEUGSENSOR FÜR EINEN GURTAUFROLLER MIT GESTUFTER AUFSTANDSFLÄCHE**
VEHICLE SENSOR FOR A BELT RETRACTOR HAVING A STAGGERED CONTACT SURFACE
DETECTEUR DE VEHICULE POUR UN ENROULEUR DE CEINTURE A SURFACE DE CONTACT ETAGEE

(30) Priorität: 04.07.2002 DE 10230211
(43) Veröffentlichungstag der Anmeldung: 06.04.2005
(73) Patentinhaber: AUTOLIV DEVELOPMENT AB, 447 83 Vargarda (SE)
(72) Erfinder: JABUSCH, Ronald, 25336 Elmshorn (DE)
(74) Vertreter: Müller, Karl-Ernst
(86) Internationale Anmeldenummer: PCT/EP2003/006671
(87) Internationale Veröffentlichungsnummer: WO 2004/005085

(56) Entgegenhaltungen:
- DE-A- 2 360 456
- DE-A- 4 209 272
- DE-A- 10 027 134
- DE-A- 19 539 619

## Beschreibung

Die Erfindung betrifft einen selbstsperrenden Gurtaufroller mit einem wenigstens fahrzeugsensitiv angesteuerten Blockiersystem für die Gurtaufwickelwelle, wobei der fahrzeugsensitive Sensor eine mit einer unterseitigen Aufstandsfläche in einem eine ebene Bodenfläche aufweisenden Trägerteil stehend angeordnete Sensormasse umfaßt, die bei auftretenden Fahrzeugbeschleunigungen in dem Trägerteil kippbar angeordnet ist und mit einem Betätigungsfortsatz für einen zugeordneten Sensorhebel die Bodenfläche des Trägerteils in einer Ausnehmung durchgreift.

Ein selbstsperrender Gurtaufroller mit den gattungsgemäßen Merkmalen ist in der DE 195 39 619 C2 beschrieben; soweit die stehend angeordnete Sensormasse auf der in dem topfförmigen Trägerteil befindlichen Bodenfläche aufsteht, ist die unterseitige Aufstandsfläche der Sensormasse mit einer leichten Krümmung ausgebildet, um das Abrollen der Aufstandsfläche der Sensormasse auf der Bodenfläche des Trägerteils zu verbessern, wenn entsprechend auftretende Fahrzeugbeschleunigungen ein Kippen der Sensormasse in dem Trägerteil herbeiführen.

Mit dem bekannten Gurtaufroller bzw. dessen fahrzeugsensitivem Sensor ist der Nachteil verbunden, daß bei der Kippbewegung der Sensormasse deren Aufstandsfläche und die Bodenfläche des Trägerteils unmittelbar aneinander abrollen, so daß in dem topfförmigen Trägerteil sich ansammelnde Schutzpartikelchen die Kippbewegung wie auch die Rückstellung der Sensormasse behindern können, wodurch die Funktion des fahrzeugsensitiven Sensors bzw. dessen Ansprechgenauigkeit hinsichtlich seiner Ansteuerbewegung für den Sensorhebel beeinträchtigt sein können.

Aus diesem Grund ist bei dem in der DE 42 09 272 A1 beschriebenen fahrzeugsensitiven Sensor die Sensormasse auf an der Bodenfläche eines Trägerteils ausgebildeten und mit einem Abrollradius versehenen Erhebungen aufgesetzt, wodurch eine punktförmige Auflage der Aufstandsfläche der Sensormasse bewirkt werden soll, so daß Schmutzpartikel die Kippbewegung ebenfalls nicht behindern. Nachteilig ist allerdings, daß das Kippverhalten der Sensormasse davon abhängig ist, wo die Sensormasse gerade steht.

Der Erfindung liegt die Aufgabe zugrunde, den Fahrzeugsensor eines Gurtaufrollers mit den gattungsgemäßen Merkmalen derart zu verbessern, daß das Kippverhalten der Sensormasse auch durch eingetretene Schmutzpartikel nicht behindert oder verändert wird.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die Aufstandsfläche der Sensormasse unter Ausbildung von wenigstens zwei Kippkanten stufenförmig ausgebildet ist, wobei die zwischen den Kippkanten verlaufenden Stufenflächen in der aufrechten Ruhestellung der Sensormasse ausgehend von dem inneren zentralen Betätigungsfortsatz in Richtung nach außen mit einem jeweils größeren Abstand zur Bodenfläche des Trägerteils angeordnet sind.

Mit der Erfindung ist der Vorteil verbunden, daß die Aufstandsfläche der Sensormasse und die Bodenfläche des Trägerteils nicht mehr flächig aufeinander, sondern über die an der Aufstandsfläche der Sensormasse ausgebildeten Kippkanten abrollen, wobei eventuell eingetretene Schmutzpartikel in den durch die Stufen gebildeten Zwischenräumen zwischen der jeweiligen Stufenfläche und der Bodenfläche des Trägerteils aufgenommen werden und so die Kippbewegung der Sensormasse und damit die Funktion des fahrzeugsensitiven Senders nicht mehr beeinträchtigen können. Es kommt in vorteilhafter Weise hinzu, daß das Kippverhalten der Sensormasse unabhängig von der Stellung der Sensormasse in dem Trägerteil ist, da insbesondere im Gegensatz zu dem Stand der Technik nach der DE 42 09 272 A1 die Kippkanten unmittelbar an der Sensormasse angeordnet sind.

Nach einen Ausführungsbeispiel der Erfindung ist vorgesehen, daß die zwischen den Kippkanten verlaufenden Stufenflächen in einer parallelen Anordnung zur Bodenfläche des Trägerteils ausgerichtet sind.

Es kann vorgesehen sein, daß zwischen dem inneren Betätigungsfortsatz und dem äußeren Umfangsrand der Aufstandsfläche der Sensormasse eine Mehrzahl von Kippkanten mit dazwischen liegenden Stufenflächen angeordnet ist, wobei zweckmäßig der äußere Umfangsrand der Aufstandsfläche die äußerste Kippkante bildet.

Hinsichtlich der Anordnung der Kippkanten und Ausbildung der einzelnen Stufen ist nach einem Ausführungsbeispiel der Erfindung vorgesehen, daß die Abstände der Stufenflächen zur Bodenfläche derart ausgelegt sind, daß jeder an einer Kippkante definierte Schwerpunktwinkel (α) geringfügig kleiner ist als der an der nächstliegenden inneren Kippkante definierte Schwerpunktwinkel (α), wobei der Schwerpunktwinkel (α) der zwischen der von der Kippkante zum Schwerpunkt der Sensormasse verlaufenden Verbindungslinie und der an der Kippkante auf der Verbindung zwischen derselben Kippkante und der nächstliegenden inneren Kippkante errichteten Normalen gemessene Winkel ist. Da die in Richtung der Kippbewegung nachfolgenden Schwerpunktwinkel jeweils kleiner sind als der vorige Schwerpunktwinkel, kippt bei einer entsprechenden Fahrzeugbeschleunigung die Sensormasse vollständig durch.

In der Zeichnung ist ein Ausführungsbeispiel der Erfindung wiedergegeben, welches nachstehend beschrieben ist. Es zeigen:
- Fig. 1: einen fahrzeugsensitiven Sensor für einen Gurtaufroller in einer Gesamtansicht mit auseinandergezogenen Einzelteilen,
- Fig. 2: den Gegenstand der Figur 1 im Zusammenbau,
- Fig. 3: die Sensormasse des Fahrzeugsensors in einer Einzeldarstellung in Seitenansicht,
- Fig. 4: eine Teilansicht der Sensormasse gemäß Figur 3 mit eingetragenen Winkelgrößen.

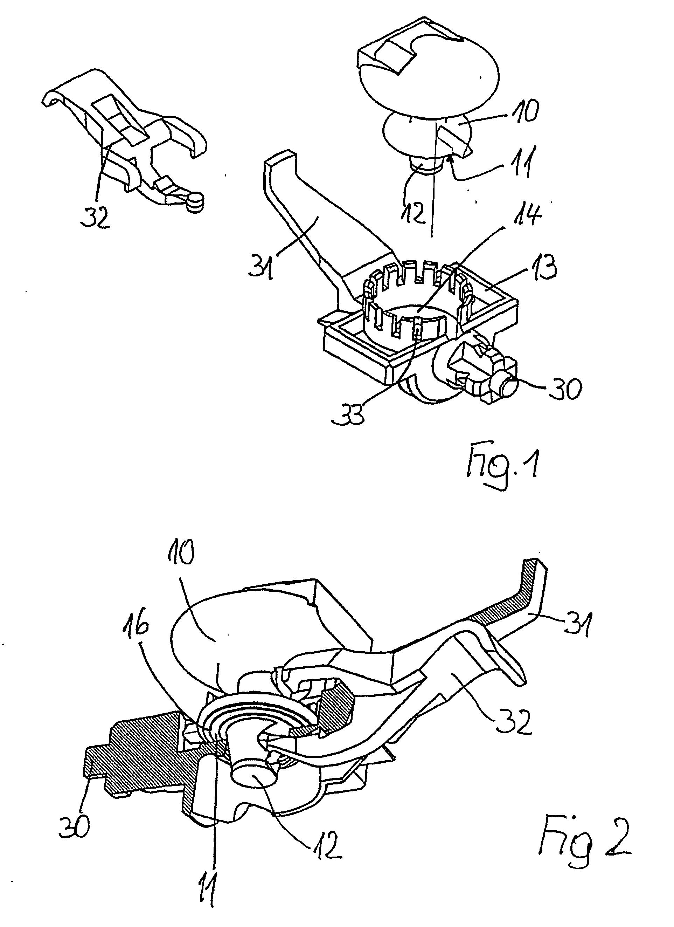

Der aus den Figuren 1 und 2 ersichtliche Fahrzeugsensor besteht aus einem Trägerteil 13, welches mittels eines Befestigungszapfens 30 an dem Gehäuse eines nicht dargestellten Gurtaufrollers festlegbar ist. An dem Trägerteil 13 ist ein Sensorhebel 32 schwenkbar gelagert. In dem Trägerteil 13 ist eine topfförmige Vertiefung ausgebildet, auf deren Bodenfläche 14 eine pilzförmige Sensormasse 10 stehend angeordnet ist, die mit einem Betätigungsfortsatz 12 die Bodenfläche 14 des Trägerteils 13 in einer zugeordneten Ausnehmung 33 durchgreift. An dem unterhalb der Bodenfläche 14 vorstehenden Fortsatz 12 der Sensormasse 10 ist der Sensorhebel 32 formschlüssig angeschlossen, der an dem Trägerteil 13 schwenkbar derart gelagert ist, daß ein Verkippen der auf der Bodenfläche 14 stehenden Sensormasse 10 aus der Hochachse zu einer Auslenkung des Sensorhebels 32 führt. Mit 31 ist eine Montagehilfe für den Fahrzeugsensor bezeichnet, die das Ergreifen des Fahrzeugsensors bei der Montage erleichtert. Das Zusammenspiel des vorstehend beschriebenen fahrzeugsensitiven Sensors mit dem Blockiersystem des Gurtaufrollers ist näher in der eingangs genannten DE 195 39 619 C2 beschrieben, so daß darauf Bezug genommen ist.

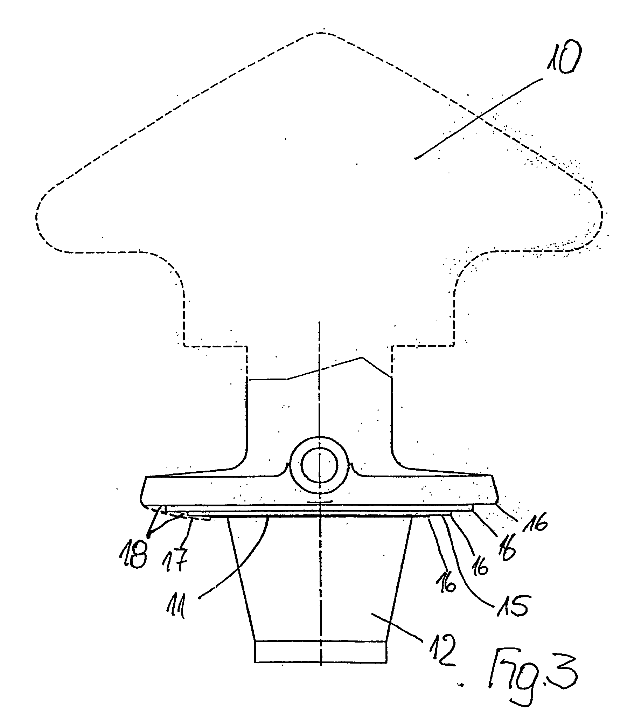

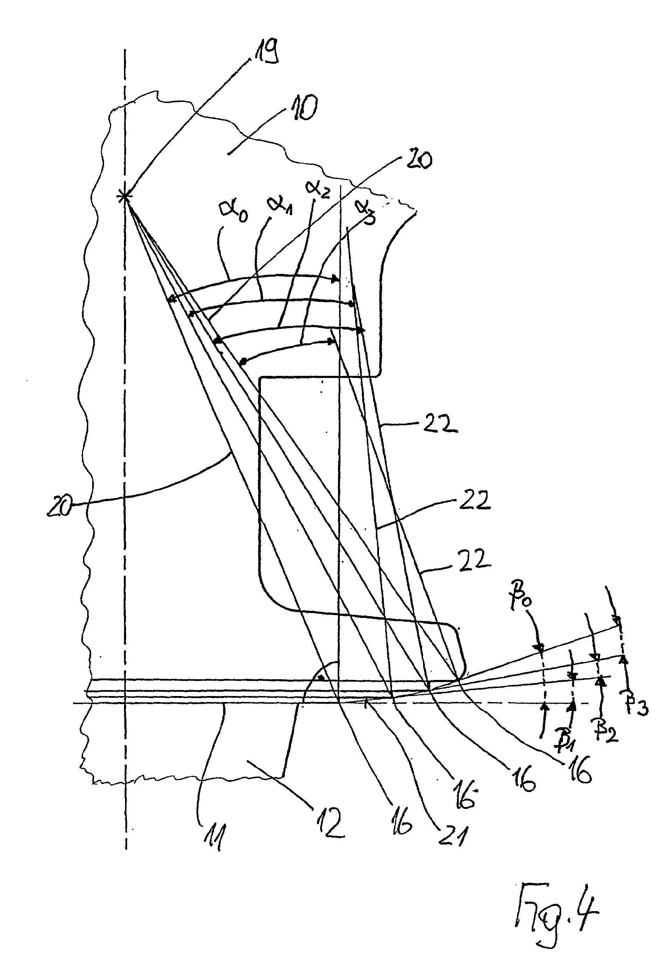

Wie sich im einzelnen aus den Figuren 3 und 4 ergibt, sind an der auf der Bodenfläche 14 des Trägerteils 13 auflagernden Aufstandsfläche 11 der Sensormasse 10 vier Kippkanten 16 dadurch ausgebildet, daß die Aufstandsfläche 11 stufenförmig ausgebildet ist. Hierzu sind ausgehend von dem inneren zentralen Betätigungsfortsatz 12 drei sich jeweils parallel zur Bodenfläche 14 des Trägerteils 13 erstreckende Stufenflächen 15 ausgebildet, die in Richtung nach außen jeweils einen größeren Abstand zu der Bodenfläche 14 einhalten, so daß der Abstand jeder dadurch gebildeten Kippkante 16 zur Bodenfläche 14 größer ausfällt als der Abstand der nächstliegenden inneren Kippkante 16 zur Bodenfläche 14. Die äußerste Kippkante 16 ist dabei durch den äußeren Umfangsrand der Aufstandsfläche 11 gebildet. Wie sich aus der linken Hälfte der Figur 3 ergibt, ist durch eine gedachte Verbindung der einzelnen Kippkanten 16 untereinander eine Abrollkontur 17 gegeben, wobei zwischen der Abrollkontur 17 und der jeweiligen Stufenfläche 15 jeweils ein Raum 18 zur Aufnahme von eventuell eintretenden Schmutzpartikeln ausgebildet ist, die an dieser Stelle die Kippbewegung der Sensormasse 10 auf der Bodenfläche 14 des Trägerteils 13 nicht stören.

Wie sich im einzelnen aus Figur 4 entnehmen läßt, sind die Kippkanten 16 an der Aufstandsfläche 11 derart angeordnet und ausgelegt, daß einzelne Schwerpunktwinkel α₀, α₁, α₂ und α₃ gebildet werden, wobei jeder Schwerpunktwinkel α der zwischen der von der Kippkante 16 zum Schwerpunkt 19 der Sensormasse 10 verlaufenden Verbindungslinie 20 und der in der betreffenden Kippkante 16 auf der Verbindung 21 zwischen derselben Kippkante 16 und der nächstliegenden inneren Kippkante 16 errichteten Normalen 22 gemessene Winkel ist. Wie sich aus der Darstellung ergibt, sind die auf den Schwerpunktwinkel α₀ folgenden Schwerpunktwinkel α₁, α₂, α₃ jeweils minimal kleiner als der jeweilige Vorgänger, so daß ein Durchkippen der Sensormasse 10 bei entsprechend großer Fahrzeugbeschleunigung gewährleistet ist. Die Höhe der Stufen ist dabei so gewählt, daß die größten anzunehmenden Schmutzpartikel darunter Platz finden.

Eine Veränderung bzw. Einstellung des Schwerpunktwinkels kann bedarfsweise vorgenommen werden, um das Kippverhalten der Sensormasse zu ändern bzw. jeweils bewußt anders einzustellen, wobei statt des Durchkippens der Sensormasse auch ein jeweils verzögertes Durchkippen oder aber auch ein kurzzeitiges Stillstehen der Sensormasse eingestellt werden kann.

Soweit die Sensormasse 10 also bei Erreichen des Schwerpunktwinkels α₀ kippt, ist es erforderlich, daß zum Erreichen eines Zurückkippens der Sensormasse 10 die Schwerpunktwinkel α um den entsprechenden Kippwinkel β₀, β₁, β₂ bzw, β₃ reduziert werden. Bei Reduzierung des Schwerpunktwinkels um den größten Kippwinkel kippt die Sensormasse 10 vollständig in die Ausgangslage zurück.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller mit einem wenigstens fahrzeugsensitiv angesteuerten Blockiersystem für die Gurtaufwickelwelle, wobei der fahrzeugsensitive Sensor eine mit einer unterseitigen Aufstandsfläche in einem eine ebene Bodenfläche aufweisenden Trägerteil stehend angeordnete Sensormasse umfaßt, die bei auftretenden Fahrzeugbeschleunigungen in dem Trägerteil kippbar angeordnet ist und mit einem Betätigungsfortsatz für einen zugeordneten Sensorhebel die Bodenfläche des Trägerteils in einer Ausnehmung durchgreift, **dadurch gekennzeichnet, daß** die Aufstandsfläche (11) der Sensormasse (10) unter Ausbildung von wenigstens zwei Kippkanten (16) stufenförmig ausgebildet ist, wobei die zwischen den Kippkanten (16) verlaufenden Stufenflächen (15) in der aufrechten Ruhestellung der Sensormasse (10) ausgehend von dem inneren zentralen Betätigungsfortsatz (12) in Richtung nach außen mit einem jeweils größeren Abstand zur Bodenfläche (14) des Trägerteils (13) angeordnet sind.

2. Gurtaufroller nach Anspruch 1, **dadurch gekennzeichnet, daß** die zwischen den Kippkanten (16) verlaufenden Stufenflächen (15) in einer parallelen Anordnung zur Bodenfläche (14) des Trägerteils (13) ausgerichtet sind.

3. Gurtaufroller nach Anspruch 1 oder 2, **dadurch gekennzeichnet, daß** zwischen dem inneren Betätigungsfortsatz (12) und dem äußeren Umfangsrand der Aufstandsfläche (11) der Sensormasse (10) eine Mehrzahl von Kippkanten (16) mit dazwischen liegenden Stufenflächen (15) angeordnet ist.

4. Gurtaufroller nach Anspruch 3, **dadurch gekennzeichnet, daß** der äußere Umfangsrand der Aufstandsfläche (11) die äußerste Kippkante (16) bildet.

5. Gurtaufroller nach einem der Ansprüche 1 bis 4, **dadurch gekennzeichnet, daß** die Abstände der Stufenflächen (15) zur Bodenfläche (14) derart ausgelegt sind, daß jeder an einer Kippkante (16) definierte Schwerpunktwinkel (α) geringfügig kleiner ist als der an der nächstliegenden inneren Kippkante (16) definierte Schwerpunktwinkel (α), wobei der Schwerpunktwinkel (α) der zwischen der von der Kippkante (16) zum Schwerpunkt (19) der Sensormasse (10) verlaufenden Verbindungslinie (20) und der an der Kippkante (16) auf der Verbindung (21) zwischen derselben Kippkante (16) und der nächstliegenden inneren Kippkante (16) errichteten Normalen (22) gemessene Winkel ist.

## Claims

1. Self-locking belt retractor having a blocking system, for the belt winding shaft, that is controlled in an at least vehicle-sensitive manner, whereby the vehicle-sensitive sensor includes a sensor mass that via a bottom contact surface is disposed upright in a support part that has a planar bottom surface, whereby the sensor mass is disposed so as to be tiltable in the support part when vehicle accelerations occur, and via an actuator extension, for an associated sensor lever, extends through the bottom surface of the support part in an opening, **characterized in that** the contact surface (11) of the sensor mass (10) has a stepped or graduated configuration so as to form at least two tilt edges (16) whereby in the upright position of rest of the sensor mass (10), the step surfaces (15) that extend between the tilt edges (16), starting from the inner, central actuator extension (12) in an outward direction, are disposed at a respectively greater distance relative to the bottom surface (14) of the support part (13).

2. Belt retractor according to claim 1, **characterized in that** the step surfaces (15) that extend between the tilt edges (16) are oriented in a parallel arrangement (14) of the support part (13).

3. Belt retractor according to claim 1 or 2, **characterized in that** a plurality of tilt edges (16) having step surfaces (15) between them are disposed between the inner actuator extension (12) and the outer peripheral edge of the contact surface (11) of the sensor mass (10).

4. Belt retractor according to claim 3, **characterized in that** the outer peripheral edge of the contact surface (11) forms the outermost tilt edge (16).

5. Belt retractor according to one of the claims 1 to 4, **characterized in that** the spacings or distance of the step surfaces (15) relative to the bottom surface (14) are configured in such a way that each center of gravity angle (α) defined at a tilt edge (16) is slightly smaller than the center of gravity angle (α) defined on the next closest inner tilt edge (16), whereby the center of gravity angle (α) is the angle measured between the connecting line (20), which extends from the tilt edge (16) to the center of gravity (19) of the sensor mass (10), and the perpendicular line (22) that at the tilt edge (16) is directed toward the connection (21) between the same tilt edge (16) and the next closest inner tilt edge (16).

## Revendications

1. Enrouleur de sangle autobloquant comprenant un système de blocage activé avec une très grande sensibilité au véhicule pour l'arbre d'enroulement de sangle, le capteur sensible au véhicule comprenant une masse capteur disposée verticalement avec une surface de contact au sol côté inférieur dans une partie support présentant une surface de fond plane, laquelle masse est disposée dans la partie support de façon à pouvoir basculer lorsqu'il apparaît des accélérations du véhicule et pénètre, avec un prolongement d'actionnement pour un levier capteur attribué, la face du fond de la partie support dans un évidement, **caractérisé en ce que** la surface de contact au sol (11) de la masse capteur (10) est conçue en gradins en formant au moins deux arêtes de basculement (16), les surfaces de marche (15) agencées entre les arêtes de basculement (16) étant disposées dans la position de repos verticale de la masse capteur (10) à partir du prolongement d'actionnement (12) central intérieur en direction de l'extérieur avec une distance respectivement supérieure à la surface de fond (14) de la partie support (13).

2. Enrouleur de sangle selon la revendication 1, **caractérisé en ce que** les surfaces de marche (15) agencées entre les arêtes de basculement (16) sont orientées dans une disposition parallèle à la surface de fond (14) de la partie support (13).

3. Enrouleur de sangle selon la revendication 1 ou 2, **caractérisé en ce qu'**un grand nombre d'arêtes de basculement (16) avec des surfaces de marche (15) intercalées est disposé entre le prolongement d'actionnement (12) intérieur et le bord périphérique extérieur de la surface de contact au sol (11) de la masse capteur (10).

4. Enrouleur de sangle selon la revendication 3, **caractérisé en ce que** le bord périphérique extérieur de la surface de contact au sol (11) forme l'arête de basculement (16) la plus extérieure.

5. Enrouleur de sangle selon l'une quelconque des revendications 1 à 4, **caractérisé en ce que** les distances des surfaces de marche (15) à la surface du fond (14) sont dimensionnées de telle sorte que chaque angle du centre de gravité (α) défini sur une arête de basculement (16) soit légèrement inférieur à l'angle du centre de gravité (α) défini sur l'arête de basculement (16) intérieure la plus proche, l'angle du centre de gravité (α) étant l'angle mesuré entre la ligne de liaison (20) allant de l'arête de basculement (16) au centre de gravité (19) de la masse capteur (10) et la perpendiculaire (22) élevée sur l'arête de basculement (16) sur la liaison (21) entre la même arête de basculement (16) et l'arête de basculement (16) intérieure la plus proche.
